# EUROPEAN PATENT APPLICATION

(11) **EP 2 127 628 A1**
(43) Date of publication of application: **02.12.2009**
(21) Application number: 09160748.1
(22) Date of filing: 20.05.2009
(51) Int. Cl.: A61J 1/03, B65D 83/04, B32B 27/08, B32B 27/30, B65D 75/34

(54) **Unit dose pack**

(30) Priority: 27.05.2008 IN DE12902008
(71) Applicant: Ranbaxy Laboratories Limited, Gurgaon - 122001, Haryana (IN)
(72) Inventor: Bhargava, Rahul, 110076 Delhi (IN); Lahiri, Achintya Kumar, 110092 Delhi (IN); Mittal, Mohit, 121002 Haryana (IN)
(74) Representative: Cronin, Brian Harold John

(57) **Abstract**

It relates to a unit dose pack for pharmaceutical composition of atorvastatin comprising a base part and a cover part wherein the base part is made up of multilayer laminate comprising an inner layer of polyvinyl chloride, a layer of coextruded polyethylene and an outer layer of polyvinylidene chloride.

## Description

### Field of the Invention

This invention relates to a unit dose pack for pharmaceutical composition of atorvastatin comprising a base part and a cover part wherein the base part is made up of multilayer laminate comprising an inner layer of polyvinyl chloride, a layer of coextruded polyethylene and an outer layer of polyvinylidene chloride.

### Background of the Invention

A number of molecules that are particularly, oxygen or moisture-sensitive have been shelved by drug manufacturers over the past 10 to 20 years because they could not be stabilized through reformulation and/or traditional packaging protection options. Thus, many promising drugs have been stopped in the pipeline for years at a later stage of development.

The advent of the new chemical entities have resulted in a need not only for enhanced protection against factors such as moisture, light or oxygen, but also for packaging forms to play a more integral role in drug delivery. These packaging forms provide an option to stabilize the drug or formulation without the need of reformulation.

Unit dosage packages have long been popular in Europe and are becoming increasingly popular in the U.S. as well. Unit dose packages provide better patient compliance and are easier to carry by patients rather than bulk packages such as bottles.

Moreover, such packaging can also prevent exposure of individual dosage to the environment in contrast to bottle packaging where once the bottle is opened, it is difficult to assure resealing of the bottle. However, the conventional unit dose packaging have some amount of air inside the package therefore does not provide an adequate barrier to oxygen or moisture.

Atorvastatin, an inhibitor of the enzyme 3-hydroxy-3-methyl glutaryl coenzyme A reductase is commercially available for the treatment of primary hypercholesterolemia, dysbetalipoproteinemia and homozygous familial hypercholesterolemia.

All the statins are relatively unstable, and their degradation may be catalyzed by several parameters like oxygen, humidity, light, acidity and temperature. Impurities generated upon degradation of active substances may reduce the therapeutic effects of an active substance and unnecessarily burden the body with degradation products. For example, oxidative degradation of atorvastatin may lead to impurities such as Atorvastatin diepoxide, dihydroxy epoxide and diketoepoxide.

WO 2005/011638 discloses the stabilization of the pharmaceutical active solid substance atorvastatin alone or in a mixture with other solid substances embedded in a gaseous mixture is carried out in such a manner that in the surrounding gaseous mixture a partial pressure of oxygen of at most 2 kPa.

US 2002/01352359 disclose a pharmaceutical packaging having an oxygen-absorber incorporated between lid and blister.

WO 2004/080808 discloses multilayer films with a barrier layer and a sealing layer containing moisture-absorbing material.

WO 2007/104344 discloses a blister base part made up of laminate for moisture or oxygen or acid sensitive products wherein said laminate has absorber material incorporated therein.

### Summary of the Invention

We have now developed a unit dose pack for pharmaceutical composition of atorvastatin comprising a base part and a cover part wherein the base part is made up of multilayer laminate comprising an inner layer of polyvinyl chloride, a layer of coextruded polyethylene and an outer layer of polyvinylidene chloride.

Hence, according to one of the aspect, there is provided a unit dose pack for pharmaceutical composition of atorvastatin comprising a base part and a cover part wherein the base part is made up of multilayer laminate comprising
a. an inner layer of polyvinyl chloride;
b. a layer of coextruded polyethylene; and
c. an outer layer of polyvinylidene chloride.

In another aspect, there is provided a unit dose pack for pharmaceutical composition of atorvastatin comprising a base part and a cover part wherein the base part is made up of multilayer laminate comprising
a. an inner layer of polyvinyl chloride having thickness of about 200-300 micron;
b. a layer of coextruded polyethylene having thickness of about 30-45 micron; and
c. an outer layer of polyvinylidene chloride.

In another aspect, there is provided a blister pack for pharmaceutical composition of atorvastatin comprising a base part and a cover part wherein said base part is made up of multilayer laminate comprising
a. an inner layer of polyvinyl chloride;
b. a layer of coextruded polyethylene; and
c. an outer layer of polyvinylidene chloride.

In another aspect, there is provided a fish bone pack for pharmaceutical composition of atorvastatin comprising a base part and a cover part wherein said base part is made up of multilayer laminate comprising
a. an inner layer of polyvinyl chloride;
b. a layer of coextruded polyethylene film; and
c. an outer layer of polyvinylidene chloride.

### Detailed Description of the Invention

As used herein the term "atorvastatin" refers to include atorvastatin free acid and pharmaceutically acceptable salts thereof such calcium, magnesium, potassium etc. Atorvastatin may exist in any of the solid state forms available such as amorphous or any other polymorphic form. Atorvastatin may be present alone or in combination with other active ingredients such as amlodipine, ezetimibe, niacin, ramipril, aspirin and other cardiovascular agents.

Pharmaceutical composition of atorvastatin may be in the form of tablet, capsule or the like. Tablets may include monolayered, bilayered or trilayered tablet.

Multilayer laminate as used herein means combination of different or same material present in different layers, in particular a laminate having layers of polyvinyl chloride/ co extruded polyethylene /polyvinylidene chloride may be used. The multilayer laminate is biaxially oriented and thermoformable. The total grammage (gsm) of the laminate should be more than 450 gsm, in particular, around 500 gsm. Multilayer laminate provides high barrier to oxygen and moisture, and therefore renders the pharmaceutical composition of atorvastatin stable throughout the entire shelf life.

Polyvinyl chloride (PVC) is required for formability and used widely for drug packaging because of its favorable cost-to-barrier ratio and its compatibility with a number of other materials. It is better suited for pharmaceutical-style packaging machinery because of the shrinkage and gauge control. PVC forms an inner layer of a multilayer laminate and is in direct contact with the drug product. The polyvinyl chloride film may have thickness and grammage of about 200-300 µm and 280 - 400 gsm, respectively.

Coextruded polyethylene as used herein is produced by the process of extrusion of polyethylene to form a multilayer film which provides an excellent barrier to oxygen and/or moisture. This film is arranged between polyvinyl chloride and polyvinylidene chloride. The coextruded polyethylene film may have thickness and grammage of about 30-45 µm and 25-50 gsm, respectively.

Polyvinylidene chloride (PVDC) is an excellent moisture barrier and may be coated on coextruded polyethylene film and forms an outer layer of a multilayer laminate which is in contact with the surrounding environment. PVDC layer weight can be customized depending on the requirements of the barrier properties. Polyvinylidene chloride layer may have grammage of about 90-120 gsm.

Other materials that may be present in the multilayer laminate include oxygen and moisture barrier polymers include polyamide, ethyl vinyl alcohol, low density polyethylene or a blend of these polymers or a laminated structure of these polymers.

The above multilayer laminate is used to form a unit dose pack. Unit dose pack as used herein includes blister pack or strip pack.

Unit dose pack generally has two parts, a base part and a cover part. The base part contains cavity in which pharmaceutical composition is filled and cover part is used to cover said base part. The said multilayer laminate forms the base part of the blister and may also form the cover part. In case of blister pack, the cover part may be a lidding.

The lidding of the blister may be made up of film containing single or plurality of layers. These films provides strong barrier to oxygen and moisture. Example of the polymer films that provides high barrier to oxygen and moisture includes polyethylene (PE), PET (polyethylene teraphthalate), aluminum foil, or a blend of these polymers or a laminated structure of these polymers, in particular aluminum foil. In order to provide proper sealing, cover part may further have heat seal lacquer on the inner side of the film.

The blister pack may be in the form of fish bone pack wherein a disc, containing oxygen absorber or moisture absorber may be placed in a blister connected to other blister containing atorvastatin pharmaceutical composition.

Unit dose pack may be further placed in a pouch or a carton or a bottle, in particular pouch. The pouch or a carton or a bottle may further comprise an oxygen absorber or moisture absorber.

Pouch or a bottle may be further heated or vacuum sealed to provide enhanced protection to the drug.

Example of material that may be used for making pouch includes oxygen- as well as moisture barrier material so that vacuum created during packaging is maintained throughout the shelf life of the drug. It can be chosen from PET (polyethylene terpthalate), polyamide (PA), polyester, aluminum foil, ethyl vinyl alcohol (EVOH), polyethylene (PE), in particular low density polyethylene or a blend of these polymers or a laminated structure of these polymers.

According to one embodiment, the fish bone pack is manufactured by a process comprising the steps of:
a. Filling the pharmaceutical composition of atorvastatin into blisters of a base part of a fish bone pack;
b. Filling an oxygen absorber disc into a blister of fish bone pack, which is connected to all the blister containing pharmaceutical composition of atorvastatin;
c. Heat sealing the blister of step b) with a cover part ;
d. Placing the fish bone pack of step c) in a pouch, optionally, containing oxygen and/or moisture absorber; and
e. Vacuum sealing or heat sealing the pouch of step d).

### EXAMPLES

### Example 1

Atorvastatin (amorphous) tablets were prepared as given in the WO 03/068191 and were packed in a fish bone pack containing a base part made up of laminate having layers of polyvinyl chloride/ polyethylene coextruded/polyvinylidene chloride wherein polyvinyl chloride and polyethylene coextruded film are have a thickness of 250 µm and 35 µm, respectively and upper part was made up of aluminum foil.

Pharmaceutical composition was filled into blisters of fish bone pack containing an oxygen absorber disc in a blister. This was sealed by heat sealing with an upper part.

The above fish bone pack was placed in a high barrier laminate pouch and the pouch was vacuum sealed. The high barrier laminate pouch had seven layers made up of Polyamide/Tie layer/Ethylene Vinyl Alcohol/ Polyamide/Tie layer/Polyethylene.

### Example 2

Atorvastatin tablets were packed in the fish bone pack as given in Example 1.
Further the above fish bone pack was placed in a four layer laminate pouch and the pouch was vacuum sealed. The four layer laminate pouch was made up of polyester/aluminum foil/polyester/low density polyethylene.

The fish bone pack of above example 1 and 2 were subjected to stability studies at 40°C and 75% RH for three month and total impurity level was monitored. Impurities such as oxo atorvastatin calcium, atorvastatin lactone, atorvastatin diepoxide, dihydroxy diepoxide, diketoepoxide, and other epoxides were identified and quantified by High Performance Liquid Chromatography, using a C-18 column and a mobile phase comprising acetonitrile and tetrahydrofuran.

**Table 1: Stability studies of pharmaceutical composition of atorvastatin in fish bone pack of Example 1 and 2.**

| Percentage of total impurity in pharmaceutical composition of atorvastatin | | | |
|---|---|---|---|
| | Initial | Two months | Three months |
| Example 1 | 0.510 | 0.885 | 0.854 |
| Example 2 | 0.510 | 0.821 | 0.906 |

It can be seen from the results that the total impurity levels were well within 1% at the 3-month station.

## Claims

1. A unit dose pack for pharmaceutical composition of atorvastatin comprising a base part and a cover part wherein the base part is made up of multilayer laminate comprising:
a. an inner layer of polyvinyl chloride;
b. a layer of coextruded polyethylene; and
c. an outer layer of polyvinylidene chloride.

2. The unit dose pack according to claim 1 wherein the polyvinyl chloride film has a thickness of about 200-300µm

3. The unit dose pack according to claim 1 wherein the coextruded polyethylene film has a thickness of about 30-45 µm

4. The unit dose pack according to claim 1 wherein the multilayer laminate has total grammage of more than 450 gsm.

5. The unit dose pack according to claim 1 wherein the cover part is made up of oxygen and moisture barrier material.

6. The unit dose pack according to claim 5 wherein oxygen and moisture barrier material is selected form the group consisting of polyethylene, polyethylene terpthalate and aluminum foil.

7. The unit dose pack according to claim 1 is further packed in a pouch, a carton or a bottle.

8. The unit dose pack according to claim 7 is further packed in a pouch and the pouch is vacuum sealed.

9. The unit dose pack according to claim 8 wherein the pouch is made up of oxygen and moisture barrier material selected form the group consisting of polyethylene terpthalate, polyamide , polyester, aluminum foil, ethyl vinyl alcohol, polyethylene or a blend of these polymers or a laminated structure of these polymers.

10. The unit dose pack according to claim 1 wherein the composition is in the form of a tablet or a capsule.

11. The unit dose pack according to claim 1 is a blister pack or a strip pack.

12. The unit dose pack according to claim 11 wherein the blister pack is a fish bone pack.

13. The unit dose pack according to claim 12 wherein the fish bone pack contains a disc of oxygen absorber or moisture absorber in a blister connected to other blisters containing atorvastatin composition.

14. The unit dose pack according to claim 13 wherein the fish bone pack is manufactured by a process comprising the steps of
a. Filling the composition of atorvastatin into blisters of a base part of a fish bone pack;
b. Filling an oxygen absorber disc into a blister of fish bone pack;
c. Heat sealing the blister of step b) with a cover part made up of aluminum foil;
d. Placing the fish bone pack of step c) in a pouch; and
e. Vacuum sealing or heat sealing the pouch of step d).
